# EUROPÄISCHE PATENTSCHRIFT

(11) **EP 3 491 347 B1**
(45) Veröffentlichungstag und Bekanntmachung des Hinweises auf die Patenterteilung: **12.02.2020**
(21) Anmeldenummer: 17742766.3
(22) Anmeldetag: 27.07.2017
(51) Int. Cl.: G01G 13/24

(54) **DOSIER- UND WIEGEVORRICHTUNG UND VERFAHREN ZUR BESTIMMUNG DES GEWICHTS EINES PRODUKTES IN EINER DOSIER- UND WIEGEVORRICHTUNG**
DOSING AND WEIGHING DEVICE AND METHOD FOR DETERMINING THE WEIGHT OF A PRODUCT IN A DOSING AND WEIGHING DEVICE
DISPOSITIF DE DOSAGE ET DE PESEE ET PROCEDE DE DETERMINATION DU POIDS D'UN PRODUIT DANS UN DISPOSITIF DE DOSAGE ET DE PESEE

(30) Priorität: 27.07.2016 EP 16181513
(43) Veröffentlichungstag der Anmeldung: 05.06.2019
(73) Patentinhaber: Bühler AG, 9240 Uzwil (CH)
(72) Erfinder: SCHAI, Peter, 9240 Uzwil (CH); HAID, René, 9242 Oberuzwil (CH); KLEINER, Andreas, 9527 Niederhelfenschwil (CH); BRAND, Heinz, 9050 Appenzell (CH)
(74) Vertreter: Hepp Wenger Ryffel AG
(86) Internationale Anmeldenummer: PCT/EP2017/068994
(87) Internationale Veröffentlichungsnummer: WO 2018/019932

(56) Entgegenhaltungen:
- EP-A1- 0 644 406
- CH-A5- 658 724
- DE-A1- 10 334 857

## Beschreibung

Die Erfindung betrifft eine Dosier- und Wiegevorrichtung, insbesondere für Schüttgüter, und ein Verfahren zur Bestimmung des Gewichts eines Produktes, insbesondere eines Schüttgutproduktes, in einer Dosier- und Wiegevorrichtung.

Dosier- und Wiegevorrichtung umfassen in der Regel ein Gehäuse mit einer Einlassöffnung und einer Auslassöffnung für ein zu wiegendes und dosierendes Produkt und werden meistens in Leitungen angeordnet, z.B. um den Durchsatz eines Produkts zu Überwachen oder ein Produkt gravimetrisch zu Dosieren (bspw. bei einer Absackung).

Vereinfacht dargestellt ist in einem Gehäuse eine Wiegefläche angeordnet, welche mittels einer Betätigungseinrichtung zwischen einer Wiegeposition und einer Dosierposition bewegbar ist und mit mindestens einem Gewichtssensor in Wirkverbindung steht. Mit der Wiegefläche in der Wiegeposition wird ein Produktfluss zwischen Einlassöffnung und Auslassöffnung verhindert. Ein Gewicht des auf der Wiegefläche lastenden Produktes ist somit mittels des wenigstens einen Gewichtssensors ermittelbar. Mit der Wiegefläche in der Wiegeposition wird der Produktfluss zwischen Einlassöffnung und Auslassöffnung zumindest teilweise ermöglicht. Zur Steuerung der Betätigungseinrichtung ist eine Steuereinheit vorhanden, welche mit dem wenigstens einen Gewichtssensor verbunden ist.

Aufgrund der zyklischen Betätigung der Dosier- und Wiegevorrichtung und des Fliessens des Produktes in der Dosier- und Wiegevorrichtung bzw. in der Produktleitung entstehen im Gehäuse Druckschwankungen, welche einen Einfluss auf die Genauigkeit der Dosier- und Wiegevorrichtung haben könnten. Um dem entgegenzuwirken ist es daher bekannt, Dosier- und Wiegevorrichtungen mit Entlüftungsöffnungen (Sog. Falschluftöffnungen) zu versehen, durch welche jedoch Verschmutzungen in den Produktfluss gelangen könnten bzw. Umweltbedingungen wie Feuchtigkeit das Produkt negativ beeinflussen können. Falls die Entlüftungsöffnungen mit Filtern versehen sind, müssen diese regelmässig gereinigt und/oder ersetzt werden. Auch somit wird jedoch kein vollständiger Schutz gegen Verunreinigungen gewährleistet. Solche Vorrichtungen eignen sich weniger für den Einsatz im Lebensmittel- oder Pharmabereich, wo geschlossene Systeme eher bevorzugt werden.

Es ist daher Aufgabe der Erfindung, eine Dosier- und Wiegevorrichtung sowie ein Verfahren zur Bestimmung des Gewichts eines Produktes anzugeben, welche die Nachteile des Bekannten vermeidet und insbesondere den zuverlässigen Betrieb einer nach aussen hin geschlossenen Dosier- und Wiegevorrichtung erlaubt.

Die Aufgabe wird mit einer Dosier- und Wiegevorrichtung und mit einem Verfahren zur Bestimmung des Gewichts eines Produktes nach dem Kennzeichen der unabhängigen Ansprüche gelöst.

Erfindungsgemäss sind Mittel zur Ermittlung einer Druckdifferenz zwischen einem Druck im Produktfluss stromaufwärts und einem Druck im Produktfluss stromabwärts der Wiegefläche angeordnet. Mittels der Steuereinheit wird die ermittelte Druckdifferenz zur Korrektur des vom Gewichtssensor ermittelten Gewichts herangezogen. Anders ausgedrückt ist ein Druck im Gehäuse in Produktflussrichtung stromaufwärts und stromabwärts der Wiegefläche ermittelbar.

Somit ist die erfindungsgemässe Dosier- und Wiegevorrichtung nach aussen hin geschlossen und hygienischer betreibbar. Eine Differenzdruckkompensation erlaubt zudem eine Verbesserung der Prozessstabilität, welche wiederum einen genaueren und schnelleren Betrieb der Dosier- und Wiegevorrichtung zur Folge hat.

Die Wiegefläche ist bevorzugt als schwenkbare Wiegefläche, insbesondere als schwenkbare Wiegeklappe, ausgebildet.

Bevorzugt sind die Mittel zur Ermittlung der Druckdifferenz als Druckdifferenzsensor ausgebildet.

Dies stellt eine einfache und kostengünstige Möglichkeit der Implementierung dar. Zudem wird bereits eine Druckdifferenz als Signal der Steuereinheit zur Verfügung gestellt, so dass der Rechenaufwand der Steuereinheit reduziert wird.

Alternativ können die Mittel zur Ermittlung der Druckdifferenz einen stromaufwärts der Wiegefläche angeordneten Drucksensor und einen stromabwärts der Wiegefläche angeordneten Drucksensor umfassen. Dabei muss dann von der Steuereinheit oder einer anderen Recheneinheit zunächst eine Druckdifferenz ermittelt werden, welche dann zur Gewichtsbestimmung herangezogen wird.

Bevorzugt ist mit den Mitteln zur Ermittlung der Druckdifferenz eine Gasdruckdifferenz, insbesondere eine Luftdruckdifferenz ermittelbar.

Wenn Schüttgut in einer Gasströmung (bspw. eine Schutzgasströmung) oder in einer Luftströmung befördert wird, ist die Druckdifferenzermittlung am besten für die Korrektur der Gewichtsbestimmung geeignet.

Bevorzugt ist das Gehäuse nach aussen hin luftdicht ausgebildet. Das bedeutet, dass mit Ausnahme der Einlassöffnung und der Auslassöffnung, das Gehäuse sonst luftdicht ausgebildet ist und insbesondere keine Ausgleichsöffnungen, ggf. mit Filtern und dgl., wie aus dem Stand der Technik bekannt, vorhanden sind. Somit ist die Vorrichtung in einem geschlossenen Produktfluss betreibbar.

Die Auslassöffnung und die Einlassöffnung weisen bevorzugt die gleiche Querschnittsfläche auf. Die Querschnittsfläche wird bevorzugt senkrecht zur Produktflussrichtung bestimmt. Eine solche Ausgestaltung des Gehäuses hat den Vorteil, dass die Gewichtsbestimmung vereinfacht wird, da Querschnittsänderungen, welche zu einer Verstärkung/Änderung vom Druckunterschied innerhalb des Gehäuses führen können, nicht berücksichtigt werden müssen.

Die Erfindung betrifft ferner ein Verfahren zur Bestimmung des Gewichts eines Produktes, insbesondere eines Schüttgutproduktes, in einer Dosier- und Wiegevorrichtung. Die oben bezüglich der Dosier- und Wiegevorrichtung beschriebenen Ausführungsformen und die genannten Vorteile sind entsprechend auf das erfindungsgemässe Verfahren anwendbar. Bevorzugt handelt es sich bei der Dosier- und Wiegevorrichtung um eine Dosier- und Wiegevorrichtung wie oben beschrieben.

Die Vorrichtung umfasst ein Gehäuse mit einer Einlassöffnung und einer Auslassöffnung für ein zu wiegendes und dosierendes Produkt und einer Dosier- und Wiegeeinheit mit einer Wiegefläche, welche mit wenigstens einem Gewichtssensor in Wirkverbindung steht. In einem Produktfluss zwischen Einlassöffnung und Auslassöffnung sind Mittel zur Ermittlung einer Druckdifferenz zwischen einem Druck im Produktfluss stromaufwärts der Dosier- und Wiegeeinheit und einem Druck im Produktfluss stromabwärts der Dosier- und Wiegeeinheit angeordnet. Anders ausgedrückt ist ein Druck im Gehäuse in Produktflussrichtung stromaufwärts und stromabwärts der Wiegefläche ermittelbar.

Erfindungsgemäss erfolgt eine Ermittlung des Gewichts des auf der Wiegefläche lastenden Produktes mittels des wenigstens einen Gewichtssensors. Die ermittelte Druckdifferenz wird dann zur Korrektur des vom Gewichtssensor ermittelten Gewichtes herangezogen.

Bevorzugt wird mit den Mitteln zur Ermittlung einer Druckdifferenz eine Gasdruckdifferenz, insbesondere eine Luftdruckdifferenz, ermittelt.

Die Erfindung wird nachfolgend anhand eines bevorzugten Ausführungsbeispiels in Verbindung mit der Zeichnung besser beschrieben. Es zeigen:
- Fig. 1: schematisch eine erfindungsgemässe Vorrichtung, und
- Fig. 2: einen graphische Darstellung des Messfehlers ohne Differenzdruckkompensation.

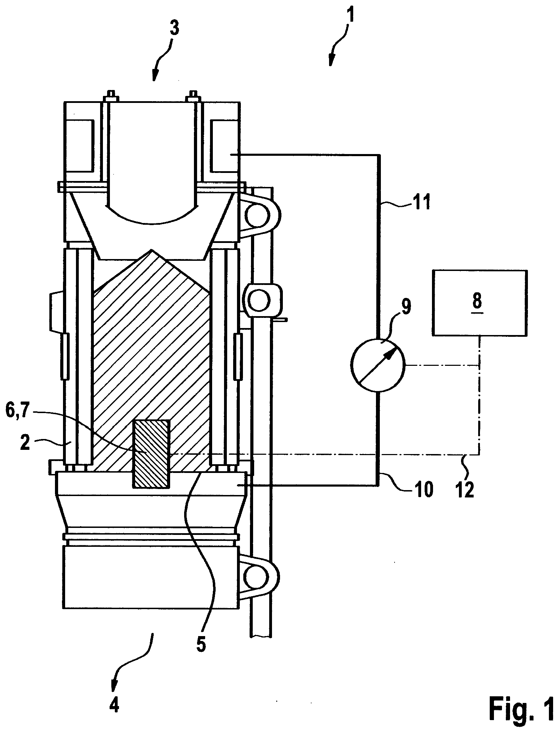

In der Figur 1 ist schematisch eine Dosier- und Wiegevorrichtung 1 dargestellt. Diese umfasst ein Gehäuse 2, welches von einem Produkt durchströmt wird. Mit den Pfeilen 3 und 4 sind jeweils eine Einlassöffnung und eine Auslassöffnung für das Produkt angedeutet. Eine Wiegefläche 5 in Form einer schwenkbaren Klappe ist im Gehäuse angeordnet. Die Wiegefläche 5 kann mittels einer Betätigungseinrichtung 6 reversibel von einer Wiegeposition zu einer Dosierposition geschwenkt werden.

In der Wiegeposition wird ein Produktfluss zwischen der Einlassöffnung 3 und der Auslassöffnung 4 verhindert. Aus der Einlassöffnung kommendes Produkt staut sich auf die Wiegefläche 5. Die Wiegefläche ist mit einem Gewichtssensor 7 verbunden, so dass ein Gewicht des auf der Wiegefläche 5 lastenden Produktes ermittelt werden kann.

In der Dosierposition wird der Produktfluss zwischen Einlassöffnung 3 und Auslassöffnung 4 hingegen ermöglicht.

Im Gehäuse 2 sind keine Entlüftungsöffnungen oder dgl. vorgesehen.

Um Druckschwankungen im Gehäuse auszugleichen, welche die Gewichtsermittlung beeinflussen können ist ein Druckdifferenzsensor 9 vorhanden. Über die Leitungen 10 und 11 kann eine Druckdifferenz zwischen einem Druck im Gehäuse stromabwärts (Leitung 10) und Stromaufwärts (Leitung 11) der Wiegefläche 5 ermittelt werden.

Eine Steuereinheit 8 ist über eine Verbindungsleitung 12, welche kabelgebunden oder drahtlos sein kann, mit der Betätigungseinrichtung 6, mit dem Gewichtssensor 7 und mit dem Differenzdrucksensor 9 verbunden.

Beim Wiegen des Produktes können somit auftretende Druckunterschiede im Gehäuse 2, welche einen Einfluss auf die Gewichtsbestimmung mittels Gewichtssensors 7 haben könnten, erfasst werden und zur Korrektur des vom Gewichtssensor 7 ermittelten Gewichts von der Steuereinheit 8 herangezogen werden.

Wenn der Druck stromabwärts der Wiegefläche 5 höher als der Druck stromaufwärts der Wiegefläche 5 ist, wird vom Gewichtssensor 7 weniger Gewicht ermittelt, als es sich tatsächlich auf der Wiegefläche 5 befindet. Umgekehrt wird bei einem höheren Druck stromaufwärts der Wiegefläche 5 vom Gewichtssensor 7 mehr Gewicht ermittelt, als es sich tatsächlich auf der Wiegefläche 5 befindet.

Durch Heranziehen der Druckdifferenz kann das vom Gewichtssensor 7 ermittelte Gewicht korrigiert und erst dann die Betätigungseinrichtung 6 zur Dosierung ausgelöst werden.

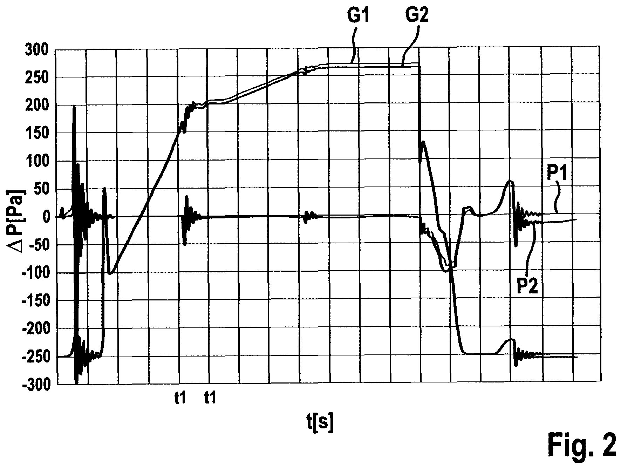

In der Figur 2 sind die Gewichtsverläufe G1 und G2 des von einem Gewichtssensor 7 ermittelten Gewichts in einer Vorrichtung ohne Differenzdruckkompensation.

Die linke Ordinatenachse zeigt einen im Gehäuse 2 gemessenen Druckunterschied ΔP in Pa und die Abszissenachse einen dimensionslosen Zeitverlauf t.

Bei der Gewichtsmessung G2 wurde der Druck stromaufwärts der Wiegefläche 5 gegenüber dem Druck stromabwärts der Wiegefläche 5 durch Ansaugen von Luft reduziert.

Wie aus dem Gewichtsverlauf G2 sichtbar, ist das vom Gewichtssensor 7 ermittelte Gewicht niedriger als beim Gewichtsverlauf G1,so dass am Ende der Messung eine Abweichung vorhanden ist, welche jedoch lediglich auf das Ansaugen von Luft zurückzuführen ist.

Ferner ist aus den Verläufen P1 und P2 (jeweils dem Gewichtsverlauf G1 und G2 zugeordnet) sichtbar, dass während des Vorganges Druckdifferenzen im Gehäuse 2 entstehen, welche ein Auseinanderdriften beider Gewichtsverläufe zur Folge haben (vgl. bspw. zwischen den Punkten t2 und t3).

Mit einer/einem erfindungsgemässen Vorrichtung bzw. Verfahren wird eine solche Abweichung weitestgehend vermieden, da der Differenzdruck stets zur Korrektur des vom Gewichtssensor 7 ermittelten Gewichts herangezogen wird.

## Patentansprüche

1. Dosier- und Wiegevorrichtung (1) für Schüttgüter umfassend:
- ein Gehäuse (2) mit einer Einlassöffnung (3) und einer Auslassöffnung (4) für ein zu wiegendes und dosierendes Produkt;
- eine Wiegefläche (5), welche mittels einer Betätigungseinrichtung (6) zwischen einer Wiegeposition und einer Dosierposition bewegbar, insbesondere schwenkbar, ist und mit mindestens einem Gewichtssensor (7) in Wirkverbindung steht, wobei
o in der Wiegeposition ein Produktfluss zwischen Einlassöffnung (3) und Auslassöffnung (4) verhindert und somit ein Gewicht des auf der Wiegefläche (5) lastenden Produktes mittels des wenigstens einen Gewichtssensors (7) ermittelbar ist, und
o in der Dosierposition der Produktfluss zwischen Einlassöffnung (3) und Auslassöffnung (4) zumindest teilweise ermöglicht wird, und
- eine Steuereinheit (8), welche zumindest zum Steuern der Betätigungseinrichtung (6) ausgebildet ist und mit dem wenigstens einen Gewichtssensor (7) verbunden ist,
**dadurch gekennzeichnet, dass**
Mittel (9) zur Ermittlung einer Gasdruckdifferenz zwischen einem Druck im Gehäuse in einer Produktflussrichtung stromaufwärts und einem Druck im Gehäuse in Produktflussrichtung stromabwärts der Wiegefläche (5) angeordnet sind und mittels der Steuereinheit (8) die ermittelte Druckdifferenz zur Korrektur des vom Gewichtssensor (7) ermittelten Gewichts herangezogen wird.

2. Dosier- und Wiegevorrichtung (1) nach Anspruch 1, **dadurch gekennzeichnet, dass** die Mittel (9) zur Ermittlung der Gasdruckdifferenz als Druckdifferenzsensor ausgebildet sind.

3. Dosier- und Wiegevorrichtung nach Anspruch 1, **dadurch gekennzeichnet, dass** die Mittel (9) zur Ermittlung der Gasdruckdifferenz einen stromaufwärts der Wiegefläche angeordneten Drucksensor und einen stromabwärts der Wiegefläche angeordneten Drucksensor umfassen.

4. Dosier- und Wiegevorrichtung nach einem der Ansprüche 1 bis 3, **dadurch gekennzeichnet, dass** die Gasdruckdifferenz eine Luftdruckdifferenz ist.

5. Dosier- und Wiegevorrichtung nach einem der Ansprüche 1 bis 4, **dadurch gekennzeichnet, dass** das Gehäuse (2) nach aussen hin luftdicht ausgebildet ist.

6. Dosier- und Wiegevorrichtung nach einem der Ansprüche 1 bis 5, **dadurch gekennzeichnet, dass** die Einlassöffnung (3) und die Auslassöffnung (4) eine gleich grosse Querschnittsfläche aufweisen.

7. Verfahren zur Bestimmung des Gewichts eines Schüttgutproduktes, in einer Vorrichtung (1), insbesondere in einer Vorrichtung nach einem der vorhergehenden Ansprüchen, umfassend:
- ein Gehäuse (2) mit einer Einlassöffnung (3) und einer Auslassöffnung (4) für ein zu wiegendes und dosierendes Produkt und einer Dosier- und Wiegeeinheit mit einer Wiegefläche (5), welche mit wenigstens einem Gewichtssensor (6) in Wirkverbindung steht,
wobei in Produktflussrichtung zwischen Einlassöffnung (3) und Auslassöffnung (4)
- Mittel (9) zur Ermittlung einer Gasdruckdifferenz zwischen einem Druck im Gehäuse stromaufwärts der Dosier-und Wiegeeinheit und einem Druck im Gehäuse stromabwärts der Dosier- und Wiegeeinheit angeordnet sind,
umfassend die Schritte:
- Ermitteln des Gewichts des auf der Wiegefläche (5) lastenden Produktes mittels des wenigstens einen Gewichtssensors (7),
- Heranziehen der Druckdifferenz zur Korrektur des vom Gewichtssensor (7) ermittelten Gewichtes.

8. Verfahren nach Anspruch 7, **dadurch gekennzeichnet, dass** mit den Mitteln (9) zur Ermittlung einer Gasdruckdifferenz eine Luftdruckdifferenz ermittelt wird.

## Claims

1. Metering and weighing apparatus (1) for bulk goods, comprising:
- a housing (2) with an inlet opening (3) and an outlet opening (4) for a product to be weighed and metered;
- a weighing surface (5) which can be moved, in particular can be pivoted, between a weighing position and a metering position by means of an operating device (6) and is operatively connected to at least one weight sensor (7), wherein,
∘ in the weighing position, a product flow between the inlet opening (3) and the outlet opening (4) is prevented and therefore a weight of the product bearing on the weighing surface (5) can be determined by means of the at least one weight sensor (7), and
∘ in the metering position, the product flow between the inlet opening (3) and the outlet opening (4) is at least partially enabled, and
- a control unit (8) which is designed at least for controlling the operating device (6) and is connected to the at least one weight sensor (7),
**characterized in that**
means (9) for determining a gas pressure difference between a pressure in the housing upstream of the weighing surface (5) in a product flow direction and a pressure in the housing downstream of the weighing surface in the product flow direction are provided and the determined pressure difference is used by means of the control unit (8) for correcting the weight which is determined by the weight sensor (7).

2. Metering and weighing apparatus (1) according to Claim 1, **characterized in that** the means (9) for determining the gas pressure difference are designed as pressure difference sensors.

3. Metering and weighing apparatus according to Claim 1, **characterized in that** the means (9) for determining the gas pressure difference comprise a pressure sensor which is arranged upstream of the weighing surface and a pressure sensor which is arranged downstream of the weighing surface.

4. Metering and weighing apparatus according to one of Claims 1 to 3, **characterized in that** the gas pressure difference is an air pressure difference.

5. Metering and weighing apparatus according to one of Claims 1 to 4, **characterized in that** the housing (2) is designed in a manner airtight to the exterior.

6. Metering and weighing apparatus according to one of Claims 1 to 5, **characterized in that** the inlet opening (3) and the outlet opening (4) have a cross-sectional area of the same size.

7. Method for determining the weight of a bulk goods product in an apparatus (1), in particular in an apparatus according to one of the preceding claims, comprising:
- a housing (2) with an inlet opening (3) and an outlet opening (4) for a product to be weighed and metered and a metering and weighing unit with a weighing surface (5) which is operatively connected to at least one weight sensor (6), wherein, in the product flow direction between the inlet opening (3) and the outlet opening (4),
- means (9) for determining a gas pressure difference between a pressure in the housing upstream of the metering and weighing unit and a pressure in the housing downstream of the metering and weighing unit are provided,
comprising the steps of:
- determining the weight of the product bearing on the weighing surface (5) by means of the at least one weight sensor (7),
- using the pressure difference for correcting the weight which is determined by the weight sensor (7) .

8. Method according to Claim 7, **characterized in that** an air pressure difference is determined using the means (9) for determining a gas pressure difference.

## Revendications

1. Arrangement de dosage et de pesage (1) pour des matières en vrac, comprenant :
- un boîtier (2) muni d'une ouverture d'entrée (3) et d'une ouverture de sortie (4) pour un produit à peser et à doser ;
- une surface de pesage (5), qui peut être déplacée, notamment pivotée, au moyen d'un dispositif d'actionnement (6) entre une position de pesage et une position de dosage et qui est en liaison fonctionnelle avec au moins un capteur de poids (7),
∘ dans la position de pesage, un écoulement de produit entre l'ouverture d'entrée (3) et l'ouverture de sortie (4) étant empêché et un poids du produit exerçant une charge sur la surface de pesage (5) pouvant ainsi être déterminé au moyen de l'au moins un capteur de poids (7), et
∘ dans la position de dosage, l'écoulement de produit entre l'ouverture d'entrée (3) et l'ouverture de sortie (4) étant au moins partiellement rendu possible, et
- une unité de commande (8) qui est au moins configurée pour commander le dispositif d'actionnement (6) et qui est reliée à l'au moins un capteur de poids (7),
**caractérisé en ce que**
des moyens (9) sont disposés pour déterminer une différence de pression de gaz entre une pression dans le boîtier dans une direction d'écoulement de produit en amont et une pression dans le boîtier dans une direction d'écoulement de produit en aval de la surface de pesage (5) sont présents, et la différence de pression déterminée est utilisée au moyen de l'unité de commande (8) pour corriger le poids déterminé par le capteur de poids (7).

2. Arrangement de dosage et de pesage (1) selon la revendication 1, **caractérisé en ce que** les moyens (9) destinés à déterminer la différence de pression de gaz sont réalisés sous la forme d'un capteur de différence de pression.

3. Arrangement de dosage et de pesage selon la revendication 1, **caractérisé en ce que** les moyens (9) destinés à déterminer la différence de pression de gaz comprennent un capteur de pression disposé en amont de la surface de pesage et un capteur de pression disposé en aval de la surface de pesage.

4. Arrangement de dosage et de pesage selon l'une des revendications 1 à 3, **caractérisé en ce que** la différence de pression de gaz est une différence de pression d'air.

5. Arrangement de dosage et de pesage selon l'une des revendications 1 à 4, **caractérisé en ce que** le boîtier (2) est réalisé de manière hermétique à l'air vers l'extérieur.

6. Arrangement de dosage et de pesage selon l'une des revendications 1 à 5, **caractérisé en ce que** l'ouverture d'entrée (3) et l'ouverture de sortie (4) possèdent une aire de section transversale de même taille.

7. Procédé de détermination du poids d'un produit en vrac dans un arrangement (1), notamment un arrangement selon l'une des revendications précédentes, comprenant :
- un boîtier (2) muni d'une ouverture d'entrée (3) et d'une ouverture de sortie (4) pour un produit à peser et à doser et d'une unité de dosage et de pesage pourvue d'une surface de pesage (5) qui est en liaison fonctionnelle avec au moins un capteur de poids (6), dans la direction d'écoulement de produit entre l'ouverture d'entrée (3) et l'ouverture de sortie (4)
- des moyens (9) étant disposés pour déterminer une différence de pression de gaz entre une pression dans le boîtier en amont de l'unité de dosage et de pesage et une pression dans le boîtier en aval de l'unité de dosage et de pesage,
comprenant les étapes de :
- détermination du poids du produit exerçant une charge sur la surface de pesage (5) au moyen de l'au moins un capteur de poids (7),
- utilisation de la différence de pression pour corriger le poids déterminé par le capteur de poids (7) .

8. Procédé selon la revendication 7, **caractérisé en ce qu'**une différence de pression d'air est déterminée avec les moyens (9) destinés à déterminer une différence de pression de gaz.
